(19) Europäisches Patentamt / European Patent Office / Office européen des brevets

(11) **EP 3 356 101 B1**

(12) **EUROPÄISCHE PATENTSCHRIFT**

(45) Veröffentlichungstag und Bekanntmachung des Hinweises auf die Patenterteilung:
**27.11.2019  Patentblatt 2019/48**

(21) Anmeldenummer: **16744756.4**

(22) Anmeldetag: **27.07.2016**

(51) Int Cl.:
*B29B 7/48* (2006.01)          *B29C 48/67* (2019.01)
*B29C 48/285* (2019.01)          *B29C 48/76* (2019.01)
*B29B 7/88* (2006.01)

(86) Internationale Anmeldenummer:
**PCT/EP2016/067959**

(87) Internationale Veröffentlichungsnummer:
**WO 2017/054957 (06.04.2017 Gazette 2017/14)**

(54) **VERFAHREN UND VORRICHTUNG ZUR KONTINUIERLICHEN MODIFIKATION EINER POLYMERSCHMELZE AUS UNEXTRAHIERTEM POLYAMID 6 MIT EINEM ODER MEHREREN ADDITIVEN**

METHOD AND DEVICE FOR CONTINUOUSLY MODIFYING A POLYMER MELT MADE OF NON-EXTRACTED POLYAMIDE 6 WITH ONE OR MORE ADDITIVES

PROCÉDÉ ET DISPOSITIF DE MODIFICATION CONTINUE D'UN POLYMÈRE EN FUSION À PARTIR D'UN POLYAMIDE 6 NON EXTRAIT POURVU D'UN OU PLUSIEURS ADDITIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2015  DE 102015116724**

(43) Veröffentlichungstag der Anmeldung:
**08.08.2018  Patentblatt 2018/32**

(73) Patentinhaber: Technip Zimmer GmbH
**60388 Frankfurt (DE)**

(72) Erfinder:
• **SCHWARZ, Raimund**
**60388 Frankfurt (DE)**
• **SARBANDI, Reza**
**60388 Frankfurt (DE)**

(74) Vertreter: **Dr. Meyer-Dulheuer & Partners LLP**
**Franklinstraße 61-63**
**60486 Frankfurt am Main (DE)**

(56) Entgegenhaltungen:
EP-A1- 0 410 649          EP-A1- 0 410 650
EP-A1- 2 532 698          WO-A1-2014/141978
WO-A1-2014/179035          WO-A2-2008/045754
US-A1- 2014 080 951          US-A1- 2015 184 055

## Beschreibung

Die Erfindung betrifft ein Verfahren und eine Vorrichtung zur Beimischung von Additiven in eine Polymerschmelze, welche als Hochkonzentrat mit einem nicht additivierten, weiteren Schmelzestrom zusammengeführt und vermischt wird. Diese auf eine benötigte Endkonzentration rückgemischte Schmelze wird schließlich verschiedenen Endanwendungen zugeführt.

Der Hintergrund der Erfindung liegt in der mangelnden Flexibilität von Polymer-Großanlagen, wie sie z. B. im Polyamid 6 (PA 6)-Bereich zu finden sind. Für bestimmte Endanwendungen werden Polymere gezielt mit Funktions- und/oder Farbadditiven versehen, um dem Polymer eine gewünschte Farbgebung zu verleihen, dessen mechanische, optische oder haptische Eigenschaften zu beeinflussen, flammhemmende oder antistatische Eigenschaften zu erzeugen und dergleichen mehr. Sie werden dazu beispielsweise mit einem $TiO_2$-Pigment versetzt oder mit Ruß schwarz eingefärbt. Werden diese Zuschlagstoffe bereits im Polymer-Herstellprozess zugegeben, so wie es üblich ist, wird somit natürlich der gesamte schmelzeführende Teil der Produktionsanlage mit dem jeweiligen Additiv kontaminiert. Umstellungen auf andere Additive bzw. auf ein verschiedenartig additiviertes Produkt bedingen einen ausgiebigen und langwierigen Reinigungsvorgang der gesamten Produktionsanlage, wodurch derartige Anlagen, welche in der Regel sehr hohe Durchsatzkapazitäten aufweisen, sehr unflexibel werden.

Wünschenswert sind damit Verfahren, welche eine Additivierung erst nach der abgeschlossenen Polymerisation ermöglichen und damit Flexibilität für unterschiedlich additivierte Endprodukte bei gleichzeitig schnellem Produktwechsel gewährleisten.

Das über den Polymerisationsprozess hergestellte Polyamid 6 besitzt direkt nach Abschluss der Polymerisation noch einen Anteil von etwa 10 Gew.-% niedermolekularer Substanzen, sogenannte Extrakte. Diese müssen, um ein verarbeitbares Produkt für die Weiterverarbeitung zu erhalten, weitgehend entfernt, d. h. extrahiert werden. Das den Polymerisationsprozess verlassende unextrahierte PA 6, ist somit ein Zwischenprodukt in der Wertschöpfungskette.

Zur Flexibilisierung von Großanlagen finden sich im Stand der Technik verschiedene Verfahren. Die DE 1 604 368 A1 beschreibt die Zugabe von Masterbatch in einen Schmelzestrom. Nachteil dieses Verfahrens ist allerdings, dass das Material einem gewissen Handling unterworfen ist und somit immer die Gefahr der Verunreinigung entsteht und das Wiederaufschmelzen zu einer Qualitätsminderung durch den polymeren Abbau führt. Darüber hinaus entstehen zusätzliche Kosten für die Trocknung des Granulates und höhere Kosten für die separate Herstellung des Masterbatches.

In einem weiteren Verfahren (Chemical Eng. Progress 78 (1982) 1, 62 ff.) werden das Polymergranulat als auch Additive wie $TiO_2$ gemeinsam in die erste Extruderzone gegeben. Hierbei ist immer das Problem einer möglichen Kompaktierung der Additive zwischen den Granulatkörnern gegeben. Diese Kompaktierung im Dispergierprozess aufzulösen, gestaltet sich in der Regel schwierig und führt üblicherweise aufgrund der hohen notwendigen Schergeschwindigkeiten zu einem unerwünschten Molekulargewichtsabbau des Matrixpolymeren. Darüber hinaus wird bei diesem Vorgehen in der Regel ein Premix der verschiedenen Substanzen verwendet. Bei einem Premix entsteht aber immer die Gefahr des Entmischens der einzelnen im Premix enthaltenen Substanzen.

In einem anderen Verfahren wird Schmelze aus dem Polymerisationsprozess in eine Schmelzeleitung geführt, aus welcher ein Seitenstrom zu einem Dispergierextruder abgezweigt wird. Der Schmelzeseitenstrom wird nach Einarbeitung der Additive wieder zurück in den Schmelzehauptstrom geführt und dort vermischt (Chemiefaser/Textilindustrie 1 (1986) 24 ff.). Zeitlich und örtlich nach der Zuführung der Schmelze in den Extruder werden Additive, darunter auch $TiO_2$, direkt von oben in die Schmelze zugegeben. Die Thermik bzw. die aufsteigenden Ausgasungsprodukte aus der Schmelze wirken sich dabei aber negativ aus. Zugeführtes Additiv verklebt und die Rieselfähigkeit wird verschlechtert. Es treten damit Inhomogenitäten in der örtlichen und zeitlichen Additivverteilung im Endprodukt auf und es entstehen Additiv-Agglomerate, welche dann die Schmelzefilter verstopfen und auch eine erhöhte Fadenbruchrate in einem nachfolgenden Spinnvorgang hervorrufen.

Die DE 40 39 857 A1 beschreibt eine Weiterentwicklung der in "Chemiefaser/Textilindustrie 1 (1986) 24 ff." beschriebenen Verfahren. Um Verklebungen durch die Thermik im Einzugsbereich der Additive und damit Inhomogenitäten im Endprodukt zu vermeiden, werden die Additive, wie z. B. $TiO_2$, von oben über ein Fallrohr in das erste Extrudergehäuse dosiert. Stromabwärts wird Polymerschmelze, bevorzugt bestehend aus Polyethylenterephthalat (PET) oder PA 6, über eine Schmelzepumpe zugegeben. Diese wird zuvor aus einer Hauptschmelzeleitung abgezweigt. Die Additive werden im Doppelschneckenextruder dispergiert, die mit Additiv beaufschlagte Schmelze zur Hauptschmelzeleitung zurückgeführt, in der Hauptschmelzeleitung mit dem Hauptschmelzestrom vermischt und auf die gewünschte Endkonzentration verdünnt. Die Schneckenelemente im Additiv-Dosierbereich wurden zur Verhinderung von Kompaktierungseffekten abgeschliffen.

Ziel der in der DE 40 39 857 A1 offenbarten Erfindung war es, ein agglomeratfreies Modifizieren der Schmelze und damit verlängerte Filterstandzeiten zu realisieren. Gemäß der Beschreibung der DE 40 39 857 A1 sind dazu erfindungsgemäß wesentlich geringere Schneckendrehzahlen als im Stand der Technik notwendig. Man erhält somit dank der geringeren Scherung nur eine minimale und konstante Viskositätserniedrigung der Polymerschmelze und zudem tritt das Thermikproblem nicht auf, wodurch keine Limitierung der Additivzugabemenge auftreten soll. Die gleiche Argumentation findet sich in WO 2012/168252 A1. Der Vorteil der Erfindungen gemäß DE 40 39 857 A1 und WO 2012/168252 A1 ist damit, dass man z. B. TiO$_2$ dispergieren kann, ohne auf hohe Drehzahlen zurückgreifen zu müssen.

Hohe Drehzahlen führen laut Beschreibung zu einem Polymerabbau bzw. zu einer Viskositätserniedrigung bis zur totalen Unbrauchbarkeit des Polymeren. So werden demzufolge Schneckendrehzahlen für Polyester von 250 min$^{-1}$ und für PA 6 von sogar nur 150 min$^{-1}$ verwendet. Höhere Drehzahlen kamen aus Viskositätserhaltungsgründen nicht in Betracht. Aufgrund der verwendeten und für den beschriebenen Prozess notwendigen niedrigen Drehzahlen ist demzufolge der Maschinendurchsatz gering bzw. geringer als es möglich wäre, wenn sich die Drehzahlen ohne Qualitätsverlust anheben ließen. Wünschenswert wären somit möglichst hohe Drehzahlen unter Beibehaltung oder im Idealfall Verbesserung der Produkteigenschaften. Außerdem gibt die DE 40 39 857 A1 keinerlei Hinweise auf Endproduktqualitäten wie beispielsweise eine Full Dull-Additivierung, welche z. B. einer TiO$_2$-Endproduktkonzentration von 1,7 bis 1,8 Gew.-% im Fall von PA 6 entspricht.

Es werden für PET in Beispiel 3 TiO$_2$-Seitenstromkonzentrationen von maximal 16 Gew.-% beschrieben, allerdings wird diese Schmelze auf eine Semi Dull-Endkonzentration von 0,4 Gew.-% verdünnt. Informationen zum deutlich anspruchsvolleren Full Dull-Endprodukt fehlen vollkommen. Die Rückverdünnung stellt jedoch bekanntermaßen einen extrem kritischen Punkt des Prozesses dar. Partikuläre Additive wie TiO$_2$ werden üblicherweise im Dispergieraggregat bis zu einem gewissen Homogenisierungsgrad bzw. bis auf eine gewisse Korngröße dispergiert. Sobald sie allerdings die Dispergierzone des Compounders verlassen, neigen gerade Additive wie TiO$_2$ dazu, aufgrund ihrer Polarität wieder größere, zusammenhängende Partikelansammlungen zu bilden, das heißt, es tritt eine Reagglomerierung auf.

Die Reagglomerierung ist umso stärker, je höher die Additivkonzentration in der Schmelze ist und stellt üblicherweise ein großes Problem dar. So zeigt die Erfahrung, dass Seitenstromkonzentrationen von 15 Gew.-% und mehr in Verbindung mit einem Full Dull-Endprodukt derart große Reagglomerate bilden, dass Schmelzefilter frühzeitig ausgetauscht werden müssen und/oder Probleme in der Weiterverarbeitung auftreten. So führen Reagglomerate, wenn sie nicht ausgefiltert werden, beispielsweise zu vermehrten Fadenabrissen in der Spinnerei. Treten die Reagglomerate aber in großer Zahl auf und werden ausgefiltert, so ergibt sich eine vehemente Verkürzung der Filterstandzeit.

Diese Reagglomerierung beginnt direkt hinter dem eigentlichen Dispergiervorgang im Compounder und tritt in den nachfolgenden Aggregaten und Rohrleitungen auf. Die Vermischung des Hochkonzentrats aus dem Seitenstrom mit dem Hauptstrom ergibt zwar eine laterale Verteilung der Reagglomerate, eine Zerteilung im statischen Mischer findet aber nicht statt. Einmal gebildete Reagglomerate bleiben in ihrer Größe erhalten und müssen ausgefiltert werden, was sich schnell sehr negativ auf die Wirtschaftlichkeit des Prozesses auswirkt.

Darüber hinaus sind die verwendeten niedrigen Drehzahlen aufgrund der damit verbundenen niedrigen Durchsätze ebenfalls schlecht für die Wirtschaftlichkeit des Prozesses. Aus Qualitätsgründen ist man aber gemäß der DE 40 39 857 A1 auf die niedrigen Drehzahlen angewiesen. Dazu kommt, dass man insbesondere für PA 6 laut Beispiel 2 lediglich eine Seitenstromkonzentration von 4 Gew.-% vorschlägt, welche auch nur auf eine Endkonzentration von 0,6 Gew.-% verdünnt wird, was das gesamte Extrusionssystem mit zugehöriger Peripherie wie Schmelzeleitungen, Pumpen etc. sehr groß und teuer werden lässt.

Für eine gute Dispergierung spielt auch die Wechselwirkungszeit der Polymerschmelze, insbesondere mit den Erzeugern hoher Schergeschwindigkeiten wie Knetblöcken, eine Rolle, aber auch die Schergeschwindigkeit, welche man über die Schneckendrehfrequenz einstellt. So ist es möglich, über einen geeigneten Schneckenaufbau auch bei geringer Drehzahl eine hohe Schergeschwindigkeit zu erreichen. Dies wird überlagert mit der Drehfrequenz der Schneckenwellen. Es ist im Rahmen der DE 40 39 857 A1 und auch im Rahmen der WO 2012/168252 A1 nicht gelungen, über die Einstellung möglicher Parameter ein akzeptables Endprodukt auch bei hohem Maschinendurchsatz zu generieren. Die WO 2012/168252 A1 macht sich vollumfänglich den Inhalt der DE 40 39 857 A1 zu Eigen. Eine Weiterentwicklung der Dispergierung und des Abbauverhaltens wurde danach im Rahmen der WO 2012/168252 A1 ausdrücklich ausgeschlossen. Full Dull-Endprodukte, welche über die Rückmischung im Schmelzehauptstrom generiert werden könnten, wurden nicht untersucht.

Die DE 10 2007 060 338 A1 legt eine weitere Möglichkeit der Additivierung über einen Doppelschneckenextruder offen, welche auch im Seitenstrom eingesetzt werden kann. Hierbei werden Additive wie TiO$_2$ über einen Seitenextruder dem Hauptextruder zugeführt. Sowohl der Seitenextruder als auch über Teilstrecken der Hauptextruder weisen einen definierten Förderspalt zwischen den Schneckenelementen und einen vergrößerten Abstand zur Gehäusewandung auf, um eine Kompaktierung des TiO$_2$ insbesondere während der Zuführung zum Doppelschneckenextruder zu verhindern. Allerdings finden sich in der DE 10 2007 060 338 A1 keinerlei Informationen zu den verwendeten Drehzahlen, Durchsätzen, Schergeschwindigkeiten oder Polymer-Endproduktqualitäten. Es werden weder eine Rückvermischung mit einem Schmelzehauptstrom, noch irgendwelche Endprodukte wie Semi Dull- oder Full Dull-modifiziertes PA 6 beschrieben. Die DE 10 2007 060 338 A1 bezieht sich ausschließlich auf die Zuführung von Pigmenten zum Dispergierprozess unter Vermeidung von Kompaktierungseffekten während der Zuführung.

Die US2014080951A1 beschreibt ein Verfahren zur Herstellung einer thermisch leitenden Zusammensetzung, welches aus den Verfahrensschritten der Einleitung eines thermisch leitenden Polymers in einen Extruder, der Einleitung eines thermisch leitenden Füllmaterials in den Extruder, der Entstehung eines Schmelzverschnittes, welcher das polymere Material und das thermisch leitende Füllmaterial enthält, und einer Extrusion der Schmelze bei gleichzeitiger Entstehung eines Extrudates besteht, wobei der Extruder einen Einlass zum Einspeisen des polymeren Materials in den Extruder und eine Extruderschnecke enthält, und die Extruderschnecke einen Abschnitt mit Knetelementen, der stromabwärts des Einlasses angeordnet ist und einen Abschnitt mit Teilmischelementen, Schraubenmischelementen, Turbinenmischelementen, Rührelementen, oder einer Kombination von zwei oder mehr der genannten Elemente, die stromabwärts der Knetelemente angeordnet sind, enthält. Die Lehre beschreibt auch eine thermisch leitende Zusammensetzung, die thermisch leitende Füllstoffe, unter denen auch Titanoxid genannt wird, enthält und die durch das genannte Verfahren hergestellt wird.

Die US2015184055A1 ist eine in Teilen fortgesetzte Anmeldung ("continuationin-part") der Anmeldung US2014080951A1 und beschreibt eine thermisch leitende Füllstoffzusammensetzung, die einen Verschnitt aus einem Bornitrid, einem Graphit, oder einer Kombination daraus, einem Talk und optional einem Silan enthält. Die Lehre beschreibt dazu beispielsweise optimierte Gewichtsverhältnisse der Zusammensetzung der einzelnen Bestandteile und Ausführungsformen von Silanen, die die Wechselwirkung der Füllstoffe mit dem zu befüllenden Polymer verbessern. Die Anmeldung nennt weiterhin Zusätze zu den Füllstoffen, worunter auch Titanoxid genannt wird. Die Anmeldung beschreibt auch ein Verfahren zur Herstellung eines thermisch leitenden Extrudates und die Verwendung der thermisch leitenden Extrudate.

Die EP0410649A1 beschreibt ein Verfahren zur Herstellung eines Polyamides mit einem hohen Molekulargewicht aus einem Polyamid-Polymervorläufer mit einem niedrigeren Molekulargewicht durch Aufbaupolymerisation, wobei der Polyamid-Polymervorläufer ein Polyamid mit verschlossenen Dicarboxylendgruppen darstellt, und die weiterführende Polymerisation in einem Extruder in Gegenwart eines Zusatzstoffes ausgeführt wird, welcher das gleiche oder ein vom zur Herstellung des Polyamid-Polymervorläufers verwendeten verschiedenes Diamin sein kann. Die Anmeldung skizziert auch den Extrusionsschritt in dem Extruder zur Herstellung des offenbarten Polyamides mithilfe eines Zweiwellenextruders, der in die Abschnitte Zuführung und Kompression, Mischen, Reaktionszone mit Fortbewegung, Entgasung und weitergehende Kompression mit Fortbewegung und Verspinnung aufgeteilt ist.

Die WO2014141978A1 beschreibt ein Verfahren zur Herstellung eines Polyamidharzes durch Polykondensation eines Polyamidoligomers, welches eine relative Viskosität von 1,1 bis 1,3 und einen Wassergehalt von 3 Gewichtsprozent oder weniger aufweist, durch Schmelzkneten unter Verwendung eines verzahnten mitläufigen Zweiwellenextruders, welcher eine oder mehrere Druckausgleichsöffnungen und eine oder mehrere Vakuumzuleitungsöffnungen enthält, wobei in dem Extruder ein druckreduzierendes Einbauteil, welches beispielsweise eine voll im Durchmesser des Zweiwellenextruders ausdehnende gegenläufige Schraube oder eine Dichtscheibe ist, zum Auslass des Wassers angeordnet ist, und wobei die Anordnung des druckreduzierenden Einbauteils näher am Eingangsteil des Zweiwellenextruders als an den Vakuumzuleitungsöffnungen angeordnet ist, und wobei ein Raumbereich von 30 % oder weniger der gesamten Länge des Zweiwellenextruders ein Vakuumbereich ist, der unter einem Druck von 300 Torr oder weniger steht.

Die WO2014179035A1 beschreibt ein Verfahren zur Mischung von Additiven in ein Polyamidpolymer, welches die Verfahrensschritte der Abzweigung eines Teilstroms von polymerisiertem Polyamid aus einer kontinuierlichen Polyamidherstellungsanlage in stromaufwärtsführender Richtung zum Erhalt eines Polyamidteilstroms, Zumischung eines Additivs in den Polyamidteilstrom zum Erhalt einer Polyamid-Additiv-Nebenmischung, und Rückführung der Polyamid-Additiv-Nebenmischung in stromabwärtsführender Richtung in den Polyamidhauptstrom enthält, wobei der abgezweigte Polyamidteilstrom in dem polymerisierten Polyamid einen Wassergehalt von 0,1 bis 0,3 % aufweist. Die Lehre beschreibt auch eine Polyamidherstellungsanlage als Polyamidherstellungssystem, welche eine Seitenleitung in stromaufwärtsführender Richtung mit einer Mischkammer enthält, so dass ein Polyamidteilstrom abgezweigt werden kann, wobei die Mischkammer zur Zudosierung eines Additivs in den Polyamidteilstrom nutzbar ist, und wobei die Rückführungsleitung für den Polyamidteilstrom mit dem zugemischten Additiv in stromabwärtsführender Richtung, jedoch stromaufwärts eines davon stromabwärts angeordneten Extruders angeordnet ist.

Die EP0410650A1 beschreibt ein Verfahren zur Herstellung eines Polyamid-Präpolymers mit einem durchschnittlichen Molekulargewicht von 3000 bis 5000 g/mol, wobei das Präpolymer durch Kondensation von festen Nylonsalzen, welche aus einer monomeren Dicarbonsäure und einem monomeren Diamin in stöchiometrischer Zusammensetzung hergestellt werden, erhältlich ist, und wobei der Kondensationsprozess in Gegenwart eines Katalysators unter Einwirkung von Hitze und Vakuum in einem Extruder durchgeführt wird. In einer Ausführungsform des Verfahrens enthält der Extruder eine Pulverzuführungszone, eine Pulverweiterleitungszone, eine Abdichtzone, eine weiterhin abgedichtete Schmelzzone, eine Vakuumzone zur Abführung der flüchtigen Kondensationsprodukte unter Vakuum, und eine Pump- und Zählzone, in der eine Polyamidschmelze erhalten wird, die zum Verspinnen weiter aufkomprimiert werden kann.

Die WO2008045754A2 beschreibt ein Verfahren zur Bereitstellung einer thermoplastischen Multicolor-Zusammensetzung, welches die Verfahrensschritte der Zuführung und Mischung eines Basispolymers mit Additiven in einen Extrusionszylinder mit zwei Wellen und mit einer ersten Mischzone, in der unter starker Schereinwirkung ein Zusammensetzungsbasismaterial hergestellt wird, enthält, weiterhin die Zumischung einer Vielzahl von Faserstoffen in das Zusammensetzungsbasismaterial in einer zweiten Mischzone des Extrusionszylinders, in der nur schwache Schereinwirkung vorhanden ist, weiterhin die Zumischung von einem oder mehreren Färbemitteln in kontrollierter Menge in den Extrusionszylinder, und das Aufdrücken des extrudierten Materials in eine Extrusionsform zum Erhalt eines extrudierten Produkts mit einer Multicolor-Oberfläche. Die erhaltenen Produkte dienen insbesondere zur Herstellung von Kunststoffprodukten mit einer holzimitierenden Oberfläche.

Gemäß der EP 0 852 533 B2 wird eine hohe Drehmomentdichte von größer 11 Nm/cm$^3$ angewendet bei gleichzeitig hoher Schneckendrehzahl von mindestens 800 min$^{-1}$ bei einem $D_a / D_i$ (Außendurchmesser / Innendurchmesser) von 1,5 bis 1,6. Die Drehmomentdichte pro Schnecke ist dabei definiert als der Quotient aus dem Drehmoment der einzelnen Schnecke und der dritten Potenz des Achsabstandes der beiden Schnecken des Doppelschneckenextruders ($M_d / a^3$). Damit liegt man gemäß der in der EP 0 852 533 B2 aufgeführten Näherungsformel zur Berechnung der mittleren Schergeschwindigkeiten

$$\overline{\dot{\gamma}} = 2\pi \cdot n_s \cdot \frac{(D_a/D_i)}{(D_a/D_i) - 1}$$

(mit $n_s$ = Schneckendrehzahl)

bei einer genäherten mittleren Schergeschwindigkeit von deutlich über 150 s$^{-1}$. Die Verweilzeit im Extruder reduziert sich, was dann gleichzeitig zu einem geringen polymeren Abbau führen soll. Man benötigt hierfür eine sehr hohe Drehmomentdichte bei gleichzeitig angepasstem Schneckenaufbau, um so einen hohen Durchsatz zu erzielen. Es wird allerdings nicht auf spezifische Polymere und deren Qualitäten eingegangen. Ebenso wird keine Rückmischung mit einem Polymerhauptstrom offenbart. Wie bei sämtlichen oben beschriebenen Dokumenten wurde auch hier kein unextrahiertes Zwischenprodukt verarbeitet, sondern nur das fertige extrahierte Endprodukt. Da der Anwendungsbereich der offenbarten Erfindung auf dem Gebiet der konventionellen Masterbatch-Herstellung liegt, war die Verarbeitung von unextrahiertem PA 6 Zwischenprodukt für diese Anmeldung auch nicht relevant. Folglich werden auch keine Partikelgrößen oder sonstigen Qualitätsmerkmale zu einem rückgemischten Produkt erwähnt, insbesondere nicht für unextrahiertes PA 6. Die Beschreibung der erfindungswesentlichen Merkmale bezieht sich vor allem auf das kontinuierliche Vermischen im Feststoffförderbereich, auf das Mahlen von grobkörnigen Schüttgütern zu Pulver und auf die konventionelle Masterbatchherstellung.

Die Besonderheit der Additivierung von unextrahiertem PA 6 liegt darin, dass der hohe Anteil an niedermolekularen Substanzen die rheologischen Eigenschaften beeinflusst. So können beispielsweise bereits Beimengungen von Substanzen im geringen bis sehr geringen Prozentbereich, insbesondere bei Polymeren, Einfluss auf die physikalischen Eigenschaften nehmen. Im Fall des unextrahierten PA 6 liegt die Menge an niedermolekularen Substanzen sogar in einem anteilsmäßig sehr hohen Bereich. Es ist demzufolge nicht im Voraus abzusehen, wie sich das unextrahierte Material bei der Additivierung verhalten wird, z. B. in Bezug auf die Dispergierung, die Reagglomerierung und den polymeren Abbau. Ausgehend von dem geschilderten Stand der Technik und den darin bestehenden Nachteilen war es die Aufgabe der vorliegenden Erfindung speziell für unextrahiertes PA 6 ein verbessertes Verfahren und eine verbesserte Vorrichtung zur Additivierung einer Polymerschmelze zur Verfügung zu stellen, welche hohe Additivkonzentrationen, insbesondere von TiO$_2$, im Seitenstrom erlauben, ohne Viskositätsabbau bei gleichzeitig hohem Durchsatz ein qualitativ hochwertiges Endprodukt nach der Rückverdünnung auch für Full Dull-Anwendungen bei schnellen Produktwechseln hervorbringen und somit eine sehr viel höhere Wirtschaftlichkeit auch durch ein im Vergleich besseres Produkt aufweisen.

Gelöst wird diese Aufgabe durch ein Verfahren und eine Vorrichtung gemäß den unabhängigen Ansprüchen. Weitere vorteilhafte Ausgestaltungen der Erfindung finden sich in den abhängigen Ansprüchen.

Möglicherweise werden die unerwartet guten Endergebnisse des erfindungsgemäßen Verfahrens unter anderem auch in der Zusammenwirkung mit der Zusammensetzung des unextrahierten Zwischenproduktes, welches üblicherweise keine Verwendung in einem Compoundierprozess findet, und den daraus resultierenden rheologischen Eigenschaften erzielt.

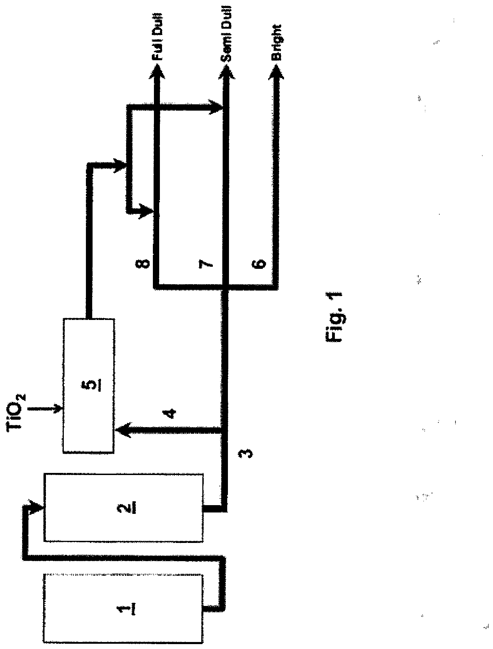

Der Verfahrensablauf wird im Folgenden mit Bezug auf Fig. 1 beschrieben. Erfindungsgemäß wird unextrahierte Polyamid 6-Schmelze aus einer ein- oder zweistufigen Polymerisationsanlage (in Fig. 1 ist beispielhaft eine zweistufige Anlage mit einer ersten Stufe (**1**) und einer zweiten Stufe (**2**) dargestellt) durch eine Hauptschmelzeleitung (**3**) gefördert, von welcher ein Schmelzeteilstrom (**4**) abgezweigt und über eine Schmelzepumpe (nicht in Fig. 1 dargestellt) in eine Dispergiervorrichtung (**5**) dosiert wird. Bei der Dispergiervorrichtung (**5**) handelt es sich vorzugsweise um einen Doppelschnecken-Dispergierextruder bzw. einen Compounder. Stromabwärts werden ein oder mehrere Additive, in der Fig. 1 für das Beispiel TiO$_2$ gezeigt, über eine Seitenfüttervorrichtung (auch als Side Feeder bezeichnet) der Dispergiervorrichtung (**5**) dosiert zugeführt, dort zunächst mit Schmelze benetzt und anschließend dispergiert. Ein Beispiel einer Seitenfüttereinrichtung (Side Feeder) findet sich in "Der Doppelschneckenextruder: Grundlagen und Anwendungsgebiete / Hrsg.: Verein Deutscher Ingenieure, VDI-Gesellschaft Kunststofftechnik. - 4. überarb. Auflage - Düsseldorf; VDI-Verlag, 1998, Seite 63". Bei den Additiven handelt es sich erfindungsgemäß um Farbstoffe und Pigmente, Antistatika, Antiblockadditive, Slipadditive und/oder flammhemmende Additive, höchst vorzugsweise um $TiO_2$, Ruß, anorganische Farbpigmente oder Silica / Kieselerden. Kurz vor dem Schmelzeaustrag kann optional noch entgast werden, bevor die Schmelze nach einer weiteren Vermischung aus der Dispergiervorrichtung (5) gefördert wird.

Anschließend wird das Gemisch einer weiteren Schmelzepumpe (nicht in Fig. 1 dargestellt) hinter der Dispergiervorrichtung (5) zugeführt, wieder in die Hauptschmelzeleitung (3) dosiert und dort noch einmal statisch vermischt. Zur Erzielung verschiedener Mattierungsgrade kann dabei in vorteilhafter Weise, wie in Fig. 1 gezeigt, die Hauptschmelzeleitung (3) zunächst in beispielsweise Hauptschmelzeteilströme (6, 7, 8) für ein Bright-, Semi Dull- und Full Dull-Produkt aufgeteilt werden und dann entsprechende Mengen des Schmelzeteilstroms (4) für das Semi Dull- und Full Dull-Produkt zugeführt werden bzw. für das Bright-Produkt ohne Zugabe aus dem Schmelzeteilstrom (4) zur Weiterverarbeitung weitergefördert werden.

Im Gegensatz zu dem in der DE 40 39 857 A1 beschriebenen Aufbau wird das Additiv nicht in das erste Extrudergehäuse eingebracht, sondern stromabwärts über eine Seitenfüttereinrichtung. Der Vorteil beim erfindungsgemäßen Einsatz einer Seitenfüttereinrichtung ist, dass die Drehfrequenz der Seitenfütterförderschnecken separat zur Drehzahl des Compounders einstellbar ist. In dem innerhalb der DE 40 39 857 A1 beschriebenen Prozess ist dies nicht möglich. Verklebungen, wie sie für den Prozess aus "Chemiefaser/Textilindustrie 1 (1986) 24 ff." beschrieben sind, treten nicht auf. Auf eine Zuführung des Additivs in das erste Gehäuse des Extruders, wie in DE 40 39 857 A1 beschrieben, kann somit verzichtet werden.

Darüber hinaus hat sich überraschenderweise gezeigt, dass auf eine Seitenfüttereinrichtung in einer Ausführung, wie sie in der DE 10 2007 060 338 A1 beschrieben ist, ebenfalls verzichtet werden kann. Ein aufwändiges Abschleifen von Schneckenelementen, wie in der DE 40 39 857 A1 für notwendig befunden, oder der Einsatz eines Förderspaltes zur Verhinderung von Kompaktierungseffekten während der Zuführung, wie in der DE 10 2007 060 338 A1 offenbart, ist überraschenderweise nicht notwendig. Es kann somit auf Standard-Zuführequipment zurückgegriffen werden, was die Wirtschaftlichkeit des Prozesses nochmals erhöht.

Da das neue Verfahren eine Schmelzebeschickung verwendet, ist die Drehmomentdichte in der Dispergiervorrichtung (5) klein. Vorzugsweise ist sie kleiner als 10 Nm/cm$^3$. Die mittleren Schergeschwindigkeiten sind, gemäß der obengenannten Näherungsformel aus der EP 0 852 533 B2 berechnet, deutlich größer als 150 s$^{-1}$ bei einem in den unten aufgeführten Beispielen vorhandenen Verhältnis $D_a / D_i$ von 1,48. Vorzugsweise kommt in der Dispergiervorrichtung (5) eine nach der Näherungsformel berechnete mittlere Schergeschwindigkeit von 150 bis 1800 sec$^{-1}$, besonders bevorzugt von 250 bis 1500 sec$^{-1}$, höchst bevorzugt von 350 bis 1200 sec$^{-1}$ zum Einsatz.

Die Additivkonzentration im Schmelzeteilstrom (4) vor der Rückvermischung mit dem Hauptschmelzestrom (3) beträgt bevorzugt 10-30 Gew.-%, besonders bevorzugt 14-25 Gew.-%, höchst bevorzugt 17-22 Gew.-%.

Vorzugsweise beträgt die Additivkonzentration im Hauptschmelzestrom (3) bzw. den Hauptschmelzeteilströmen (7, 8) nach Zumischen des Schmelzeteilstroms (4) 0,03 bis 3 Gew.-%, besonders bevorzugt 1,5 bis 2,3 Gew.-%, höchst bevorzugt 1,7 bis 2,0 Gew.-%. Bevorzugt handelt es sich bei dem hergestellten Produkt um ein Full Dull-Produkt (bei PA 6 entsprechend 1,7-1,8 Gew.-% $TiO_2$)

Die maximale Größe der Additivpartikel, insbesondere für den Fall von $TiO_2$-Partikeln, beträgt im rückgemischten Endprodukt dabei vorzugsweise 5 $\mu$m, besonders bevorzugt 3 $\mu$m.

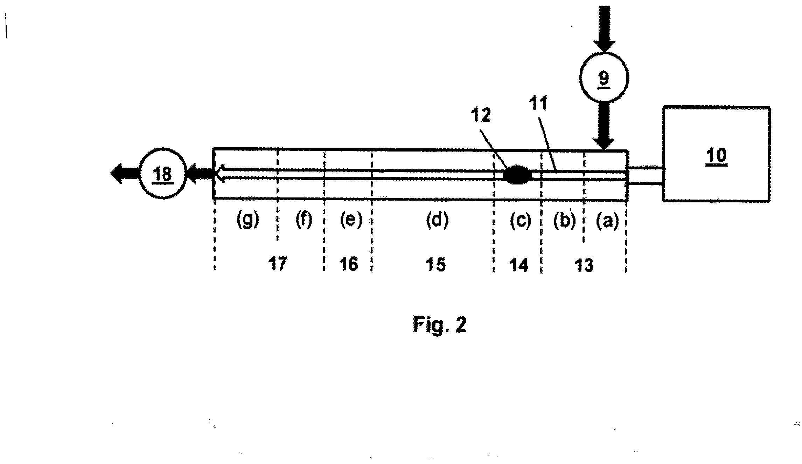

Der Aufbau einer erfindungsgemäßen Dispergiervorrichtung (5) und deren Schmelzezu- und -abfuhr ist beispielhaft in Fig. 2 dargestellt. Bei dem in den nachfolgend beschriebenen Beispielen zum Einsatz gekommenen Extruder handelt es sich um einen Compounder des Typs ZE25A-48D-UTX der Firma Krauss-Maffei Berstorff GmbH. Der Schneckenaufbau der vom Extruderantrieb (10) angetriebenen Doppelschnecke (11) des Compounders weist folgende fünf Bereiche mit verschiedenen Behandlungszonen auf: Einen ersten Bereich (13) mit einer Zone (a) zur Zuführung des unextrahierten PA 6 mittels der Schmelzepumpe (9), danach stromabwärts optional alternierend Knetblöcke und auf jeden Fall Förderelemente (b). Die Knetblöcke können dabei im gesamten Prozess fördernd, neutral oder auch rückwärtsfördernd ausgelegt sein, je nach Prozessanforderung. Im Anschluss daran befindet sich stromabwärts in einem zweiten Bereich (14) eine Zone zur Einbringung des Additivs (c) über eine am Anschluss für den Side Feeder (12) angeschlossene Seitenfüttereinrichtung mit anschließender Benetzung. Danach folgen in einem dritten Bereich (15) zur optimalen Dispergierung wieder alternierend Knetblöcke und Förderelemente gefolgt von teildurchlässigen Förderelementen (Zone (d)), welche vorwärts, aber auch rückwärts drehend ausgelegt sein können. Im Anschluss daran folgt in einem vierten Bereich (16) eine mit Förderelementen oder teildurchlässigen Förderelementen bestückte, verschließbare Entgasungszone (e), gefolgt in einem fünften Bereich (17) von Mischelementen wie z. B. Zahnscheiben, welche ebenfalls wieder rückwärts- oder vorwärtsdrehend sein können, in Zone (f). Schließlich folgt in Zone (g) über Förderelemente der Austrag der hochkonzentrierten Schmelze aus dem Compounder. Im Anschluss an die Dispergiervorrichtung (5) erfolgt der Weitertransport der additivierten Schmelze mittels der Schmelzepumpe (18).

Beispiele für teildurchlässige Förderelemente sind in den Zeichnungen 4 bis 6 der Patentanmeldung WO2014141978A1 angegeben.

Die genannte Abfolge der fünf Bereiche mit den Behandlungszonen ist erfindungsgemäß so vorgegeben, der genaue Schneckenaufbau kann aber im Detail mittels der obengenannten Optionen an die jeweiligen Polymer- und Additiveigenschaften sowie die gewünschte Additivbeladung angepasst werden.

Bei den Beispielen kam ein $TiO_2$-Produkt der Firma Sachtleben mit der Bezeichnung "Hombitan LO-CR-S-M W/O Si" zum Einsatz.

Bei dem Vergleichsbeispiel handelt es sich um ein kommerziell erhältliches Full Dull PA 6 Produkt der Firma LiHeng (Changle) Polyamide Technology Co., Ltd, das von dieser als Rohstoff für verschiedene Garne verwendet wird. Es ist ein fertiges, extrahiertes PA 6-Polymer, bei welchem die niedermolekularen Anteile bereits vor der Additivierung durch Extraktion entfernt wurden. Dieses dient zum Vergleich der $TiO_2$-Partikelgrößenverteilung.

In Tabelle 1 sind die Versuchsdaten für die Herstellung der Beispiele im Compounder zusammengefasst.

Tabelle 1

|  | Beispiel 1 | Beispiel 2 | Vergleichsbeispiel |
|---|---|---|---|
| Schmelze-Eintrittstemperatur, [°C] | 265 | 265 | - |
| Massetemperatur (Austritt), [°C] | 269 | 269 | - |
| Massedruck, [bar] | 11 | 14 | - |
| Drehzahl, $[min^{-1}]$ | 1200 | 1200 | - |
| Durchsatz ZE25, [kg/h] | 25,5 | 12,75 | - |
| $TiO_2$-Konzentration im Schmelzeteilstrom, [Gew.-%] | 10 | 20 | - |
| Gesamtdurchsatz, [kg/h] | 150 | 150 | - |
| $TiO_2$-Endkonzentration, [Gew.-%] | 1,7 | 1,7 | 1,7 |

Die Proben der Beispiele und des Vergleichsbeispiels wurden mit Hilfe der Rasterelektronenmikrospie (SEM) und der Viskosimetrie charakterisiert.

Bei den SEM-Untersuchungen wurden die Proben rasterelektronenmikroskopisch vermessen und mittels der statistischen Auswertungsmethode "$x_{50}$" ausgewertet. Eine Beschreibung der statistischen Auswertung "$x_{50}$" findet sich in "The Science and Engineering of Granulation Processes", Jim Litster, Bryan Ennis, Springer Science+Business Media Dordrecht, 2004, ISBN 978-1-4020-1877-0, Seite 17-24". Für die vorliegenden Untersuchungen wurde eine Auswertung auf Basis der volumetrischen Verteilung genutzt, die dementsprechend eine höhere Gewichtung der für das Verstopfen von Schmelzefiltern relevanteren größeren Partikeln erzeugt als eine anzahlbasierte Verteilung. Die in der folgenden Tabelle 2 angegebenen Werte entsprechen dabei dem Durchmesser der Partikel, die bei einer kumulativen volumenbasierten Auswertung von 50 % der Teilchen passiert werden.

Die eigentliche elektronenmikroskopische Messung wurde wie folgt durchgeführt:

Zur Probenvorbereitung wurden die Chips in einem Probenhalter fixiert und dem Plasmaätzprozess unterworfen. Um die Chips dann zu erfassen, wurden vier Chips in dem Probenhalter fixiert und drei Bilder pro Chip oder zwölf Bilder pro Probe gemacht.

Die SEM Messung erfasst Partikel, die größer als 80 nm sind, auf einer Betrachtungsfläche von mindestens $0,0074$ $mm^2$. Dies ergibt eine gesamte Partikelanzahl von ungefähr 500 - 1000 Partikel. Die gemessenen Partikel werden dann in Teile > 0,3 $\mu$m / > 0,6 $\mu$m / > 1,0 $\mu$m unterteilt und wie oben beschrieben mittels der statischen Auswertung $x_{50}$ ausgewertet.

Die Relativen Viskositäten wurden gemäß DIN EN ISO 307 gemessen.

Die Messergebnisse sind in Tabelle 2 zusammengefasst.

Tabelle 2

|  | Beispiel 1 | Beispiel 2 | Vergleichsbeispiel |
|---|---|---|---|
| SEM (kumulativ, $x_{50}$, $TiO_2$), [$\mu$m] | 0,48 | 0,45 | 0,47 |
| 3 größte $TiO_2$-Partikel (SEM), [$\mu$m] | 2,37/1,25/1,22 | 1,3/1,12/1,1 | 1,12/1,03/1,0 |
| Relative Viskosität, [-] | 2,29 | 2,30 | 2,5 |

Wie die Tabelle 2 zeigt, ergab sich mit dem neuen Verfahren im Vergleich zum kommerziellen Produkt eine hervorragende Partikelgrößenverteilung. Damit ist das mit dem neuen Verfahren hergestellte Produkt dem kommerziellen Produkt aus einer konventionellen Produktion absolut vergleichbar.

Die Relativen Viskositäten der Proben von Beispiel 1 und Beispiel 2 lagen bei 2,29 und 2,30. Zusätzlich zum Vergleichsbeispiel aus Tab. 2, welches das kommerzielle Produkt darstellt, wurde eine Nullprobe aus dem unextrahierten, d. h. nicht extrudierten Ausgangsmaterial untersucht. Dieses nicht extrudierte und unextrahierte Ausgangsmaterial wies eine Relative Viskosität von 2,25 auf. D. h., es ist keinerlei polymerer Kettenabbau während des Compoundiervorgangs aufgetreten.

Die gemessenen maximalen $TiO_2$-Partikelgrößen liegen meist bei weniger als 2 $\mu$m nach Rückmischung für das Full Dull-Endprodukt. In Anbetracht der Tatsache, dass in einem PA 6-Produktionsprozess eine sehr viel gröbere Filtration verwendet wird, z. B. 10 $\mu$m, ist dieses ein hervorragendes und überraschendes Ergebnis. Der Einsatz einer verstärkten Filtration, so wie sie z. B. bei einem Full Dull-Endprodukt üblicherweise essentiell notwendig ist, um ein akzeptables Endprodukt zu erhalten, ist nach dem neuen Verfahren nicht mehr nötig. D. h., die sonst üblicherweise auftretende schädliche Reagglomeration hinter dem Compounder auf Partikelgrößen, welche in der Lage sind, Produktionsfilter der in der Produktion üblichen Feinheit zu verstopfen, treten nicht auf.

Die rasterelektronenmikroskopischen Untersuchungen zeigen vergleichbare bis bessere Werte als das kommerzielle Full Dull-Produkt, welches nach dem konventionellen Verfahren mit $TiO_2$-Zugabe im Polymerisationsprozess produziert wurde.

**Bezugszeichenliste**

| | |
|---|---|
| 1 | erste Stufe der Polymerisationsanlage |
| 2 | zweite Stufe der Polymerisationsanlage |
| 3 | Hauptschmelzeleitung |
| 4 | Schmelzeteilstrom |
| 5 | Dispergiervorrichtung |
| 6 | Hauptschmelzeteilstrom "Bright" |
| 7 | Hauptschmelzeteilstrom "Semi Dull" |
| 8 | Hauptschmelzeteilstrom "Full Dull" |
| 9, 18 | Schmelzepumpe |
| 10 | Extruderantrieb |
| 11 | Doppelschnecke |
| 12 | Anschluss Side Feeder |
| 13 | erster Bereich (Zone (a) und (b)) |
| 14 | zweiter Bereich (Zone (c)) |
| 15 | dritter Bereich (Zone (d)) |
| 16 | vierter Bereich (Zone (e)) |
| 17 | fünfter Bereich (Zone (f) und (g)) |

**Patentansprüche**

**1.** Verfahren zur kontinuierlichen Modifikation einer Polymerschmelze aus unextrahiertem Polyamid 6 (PA 6) mit einem oder mehreren Additiven, wobei ein Teil der Schmelze aus einem Hauptschmelzestrom (**3**) abgezweigt wird, dieser Schmelzeteilstrom (**4**) in eine Dispergiervorrichtung (**5**) gefördert wird, ein oder mehrere Additive zugeführt und vermischt werden, der additivierte Schmelzeteilstrom (**4**) danach wieder in den Hauptschmelzestrom (**3**) zurückgeführt, dort gemischt und anschließend der Weiterverarbeitung zugeführt wird, wobei

- die der Dispergiervorrichtung (**5**) zugeführte Schmelze in einen ersten Bereich (**13**) gefördert und von dort mit Förderelementen in einen zweiten Bereich (**14**) gefördert wird;
- im zweiten Bereich (**14**) über eine Seitenfüttereinrichtung ein oder mehrere Additive zugeführt und mit der Schmelze benetzt werden;
- die Additive in einem dritten Bereich (**15**) dispergiert und gemischt werden, wobei zur optimalen Dispergierung alternierend Knetblöcke und Förderelemente gefolgt von teildurchlässigen Förderelementen, welche vorwärts und/oder rückwärts drehend ausgelegt sind, eingesetzt werden;
- in einem mit einer verschließbaren Entgasungszone ausgestatteten vierten Bereich (**16**) entweder eine Entgasung durchgeführt oder die Schmelze nur gefördert wird;
**dadurch gekennzeichnet, dass**
- in einem fünften Bereich (**17**), welcher rückwärtsdrehende und/oder vorwärtsdrehende und/oder neutrale Mischelemente aufweist, eine weitere Vermischung der Additive mit der Schmelze und anschließend über Förderelemente der Austrag der mit Additiven beladenen Schmelze aus der Dispergiervorrichtung (**5**) vorgenommen wird; wobei
- die aus der Dispergiervorrichtung (**5**) ausgetragene Schmelze wieder zurück in den Hauptschmelzestrom (**3**) geleitet, dort mittels einer statischen Mischvorrichtung vermischt und auf die Endkonzentration verdünnt wird.

2. Verfahren nach einem der vorhergehenden Ansprüche, **dadurch gekennzeichnet, dass** das Additiv $TiO_2$ ist.

3. Verfahren nach einem der vorhergehenden Ansprüche, **dadurch gekennzeichnet, dass** die Additivkonzentration im Schmelzeteilstrom (**4**) vor der Rückvermischung mit dem Hauptschmelzestrom (**3**) 10-30 Gew.-% beträgt.

4. Verfahren nach einem der vorhergehenden Ansprüche, **dadurch gekennzeichnet, dass** die Additivkonzentration im Hauptschmelzestrom (**3**) nach Zumischen des Schmelzeteilstroms (**4**) 0,03 bis 3 % beträgt.

5. Verfahren nach einem der vorhergehenden Ansprüche, **dadurch gekennzeichnet, dass** in der Dispergiervorrichtung (**5**) eine Schergeschwindigkeit von 150 bis 1800 $sec^{-1}$ zum Einsatz kommt.

6. Verfahren nach einem der vorhergehenden Ansprüche, **dadurch gekennzeichnet, dass** die maximale Größe der Additiv-Partikel im rückgemischten Endprodukt 5 |jm beträgt.

7. Verfahren nach einem der vorhergehenden Ansprüche, **dadurch gekennzeichnet, dass** die Drehmomentdichte der Dispergiervorrichtung (5) 10 $Nm/cm^3$ nicht überschreitet.

8. Vorrichtung zur kontinuierlichen Modifikation einer Polymerschmelze aus unextrahiertem Polyamid 6 (PA 6) mit einem oder mehreren Additiven, beinhaltend eine Hauptschmelzeleitung (**3**), eine Abzweigleitung, die einen Teil der Schmelze aus der Hauptschmelze (**3**) abzweigt und diesen Schmelzeteilstrom (**4**) in eine Dispergiervorrichtung (**5**) mit mindestens fünf Bereichen leitet die über eine Zufuhr für ein oder mehrere Additive verfügt, wobei die Dispergiervorrichtung (**5**)

- einen mit Förderelementen bestückten ersten Bereich (**13**) zur Zuführung des unextrahierten PA 6 mittels einer Schmelzepumpe (**9**) enthält, und
- einen mit Förderelementen bestückten zweiten Bereich (**14**) mit einer Zone zur Einbringung des Additivs über eine am Anschluss für den Side-Feeder (**12**) angeschlossene Seitenfüttereinrichtung mit anschließender Benetzung enthält, und
- einen alternierend mit Knetblöcken und Förderelementen, gefolgt von Förderelementen und teildurchlässigen Förderelementen, wobei die teildurchlässigen Förderelemente und zumindest ein Teil der Förderelemente vorwärts und/oder rückwärts drehend ausgelegt sind, bestückten dritten Bereich (**15**) zur optimalen Dispergierung enthält, und
- einen vierten Bereich (**16**) mit einer mit Förderelementen oder teildurchlässigen Förderelementen bestückten verschließbaren Entgasungszone enthält,
**dadurch gekennzeichnet, dass**
- die Dispergiervorrichtung (**5**) einen mit rückwärtsdrehenden und/oder vorwärtsdrehenden und/oder neutralen Mischelementen gefolgt von Förderelementen zum Austrag der hochkonzentrierten Schmelze aus der Dispergiervorrichtung (**5**) bestückten fünften Bereich (**17**) enthält, und
- die Vorrichtung eine Rückführleitung für den additivierten Schmelzeteilstrom (**4**) in die Hauptschmelzeleitung (**3**) aufweist, durch die das Gemisch hinter der Dispergiervorrichtung (**5**) einer weiteren Schmelzepumpe (**18**) zugeführt und wieder in die Hauptschmelzeleitung (**3**) dosiert wird, und dort durch eine statische Mischvorrichtung für die Vermischung des additivierten Schmelzeteilstroms (**4**) mit dem Hauptschmelzestrom (**3**) noch einmal statisch vermischt wird.

9. Vorrichtung nach Anspruch 8, **dadurch gekennzeichnet, dass** die Dispergiervorrichtung (**5**) ein gleichläufiger Doppelschneckenextruder ist.

10. Vorrichtung nach einem der Ansprüche 8 oder 9, **dadurch gekennzeichnet, dass** es sich bei den Mischelementen in dem fünften Bereich (17) um Zahnscheiben handelt.

11. Vorrichtung nach einem der Ansprüche 8 bis 10, **dadurch gekennzeichnet, dass** es sich bei den Mischelementen in dem in dem fünften Bereich (17) um teildurchlässige Förderelemente handelt.

**12.** Vorrichtung nach einem der Ansprüche 8 bis 10, **dadurch gekennzeichnet, dass** es sich bei den Mischelementen in dem fünften Bereich (**17**) um Zahnscheiben und teildurchlässige Förderelemente handelt.

**13.** Vorrichtung nach einem der Ansprüche 10 oder 12, **dadurch gekennzeichnet, dass** die Zahnscheiben rückwärts- oder vorwärtsdrehend sind.

**14.** Vorrichtung nach einem der Ansprüche 8 bis 13, **dadurch gekennzeichnet, dass** die Schnecken der Seitenfüttereinrichtung in ihrer Drehzahl unabhängig von der Drehzahl der Dispergiervorrichtung (**5**) einstellbar sind.

**Claims**

**1.** A process for the continuous modification of a polymer melt of non-extracted polyamide 6 (PA 6) with one or more additives, wherein a part of the melt is branched off from a main melt flow (3), this melt side-flow (4) is conveyed into a dispersing device (5), one or more additives are added and mixed, the additized melt side-flow (4) is then returned back into the main melt flow (3) where it is mixed and subsequently transported for further processing, **characterized in that**

- the melt supplied to the dispersing device (5) is conveyed into a first region (13) and from there is conveyed by conveying elements into a second region (14);
- in the second region (14) one or more additives are supplied via a side-feeder and wetted with the melt;
- the additives are dispersed and mixed in a third region (15), wherein for optimal dispersion kneading blocks and conveying elements are used alternately, followed by partially permeable conveying elements which are designed to rotate forwards and/or backwards;
- in a fourth region (16) equipped with a closable degassing zone a degassing is performed or the melt is only conveyed;
**characterized in that**
- in a fifth region (17), which has backward-rotating and/or forward-rotating and/or neutral mixing elements, the additives are further mixed with the melt and then the additive-laden melt is discharged from the dispersing device (5) via conveying elements; wherein
- the melt which is discharged from the dispersing device (5) is conducted back into the main melt flow (3), where it is mixed statically and diluted to the final concentration.

**2.** Method according to one of the preceding claims, **characterized in that** the additive is TiO$_2$.

**3.** Method according to one of the preceding claims, **characterized in that** the additive concentration in the melt side- flow (4) prior to back-mixing with the main melt flow (3) is 10-30 wt.%.

**4.** Method according to one of the preceding claims, **characterized in that** the additive concentration in the main melt flow (3) after admixing the melt side-flow (4) is 0.03 to 3%.

**5.** Method according to one of the preceding claims, **characterized in that** a shear rate of 150 to 1800 sec$^{-1}$ is used in the dispersing device (5).

**6.** Method according to one of the preceding claims, **characterized in that** the maximum size of the additive particles in the back-mixed end product is 5 $\mu$m.

**7.** Method according to one of the preceding claims, **characterized in that** the torque density of the dispersing device (5) does not exceed 10 Nm/cm$^3$.

**8.** An apparatus for continuously modifying a polymer melt of non-extracted polyamide 6 (PA 6) with one or more additives, comprising a main melt line (3), a branch line, the branch line (3) branching off a part of the melt from the main melt (3), conveying this melt side-flow (4) into a dispersing device (5) with at least five regions, comprising a supply for one or more additives, wherein
the dispersing device (5) comprises

- a first region (13) equipped with conveying elements for feeding the non-extracted PA 6 by means of a melt pump (9), and

- a second region (14) equipped with conveying elements having a zone for introducing the additive via a side feeding device connected to the connection for the side feeder (12), with subsequent wetting and

- a third region (15) equipped alternately with kneading blocks and conveying elements followed by conveying elements and partially permeable conveying elements, wherein the partially permeable conveying elements and at least part of the conveying elements are designed to rotate forwards and/or backwards for optimal dispersion, and

- a fourth region (16) comprising a lockable degassing zone equipped with conveying elements or partially permeable conveying elements

**characterized in that**

- the dispersing device (5) comprising a backward-rotating and/or forward-rotating and/or neutral mixing elements followed by conveying elements to discharge the highly concentrated melt from the dispersing device (5) from the fifth region (17), and

- the device comprising a return line for the additized melt side-flow (4) to the main melt line (3), through which the melt is conveyed to a further melt pump (18) following the dispersing device (5) and metered again into the main melt line (3), and is statically mixed again by means of a static mixing device for mixing the additized melt side-flow (4) with the main melt flow (3).

9. Device according to claim 8, **characterized in that** the dispersing device (5) is a co-rotating twinscrew extruder.

10. Device according to one of claims 8 or 9, **characterized in that** the mixing elements in the fifth region (17) are toothed discs.

11. Device according to one of claims 8 to 10, **characterized in that** the mixing elements in the fifth region (17) are partially permeable conveying elements.

12. Device according to one of claims 8 to 10, **characterized in that** the mixing elements in the fifth region (17) are toothed discs and partially permeable conveying elements.

13. Device according to any one of claims 10 or 12, **characterized in that** the toothed discs are backward or forward rotating.

14. Device according to any one of claims 8 to 13, **characterized in that** the rotational speed of the screws of the side feeder is adjustable independent of the rotational speed of the dispersing device (5).

**Revendications**

1. Procédé de modification en continu d'un polymère fondu composé d'un polyamide 6 non extrait (PA 6) avec un ou plusieurs additifs, où une partie de la fusion dévie d'un flux principal de matière en fusion (3), ce flux partiel de masse fondue (4) est transporté dans un dispositif de dispersion (5), un ou plusieurs additifs sont ajoutés et mélangés, le flux partiel de masse fondue contenant les additifs (4) est ensuite reconduit dans le flux principal de matière en fusion (3) où il est mélangé puis introduit pour le traitement ultérieur, et

- la matière en fusion introduite dans le dispositif de dispersion (5) est transportée dans un premier compartiment (13) puis envoyée avec des éléments de transport dans un deuxième compartiment (14) ;

- dans ce deuxième compartiment (14), un ou plusieurs additifs sont ajoutés par le biais d'un alimentateur latéral puis humidifiés avec la masse fondue ;

- les additifs sont dispersés et mélangés dans un troisième compartiment (15) où des blocs de pétrissage sont utilisés en alternance avec des éléments de transport suivis d'éléments de transport partiellement perméables, conçus pour une rotation vers l'avant et/ou vers l'arrière, afin que la dispersion soit optimale ;

- dans un quatrième compartiment (16), équipé d'une zone de dégazage verrouillable, a lieu soit le dégazage soit le transport de la masse fondue ;

**caractérisé en ce que**

- dans un cinquième compartiment (17), comportant des éléments de mélange rotatifs vers l'arrière et/ou vers l'avant et/ou neutres, les additifs sont de nouveau mélangés à la masse fondue puis la masse fondue contenant les additifs est extraite du dispositif de dispersion (5) par le biais d'éléments de transport ; et

- la masse fondue extraite du dispositif de dispersion (5) est reconduite dans le flux principal de matière en fusion (3) où elle est mélangée grâce à un dispositif de mélange statique et diluée pour former la concentration finale.

2. Procédé selon une des spécifications précédentes, **caractérisé en ce que** l'additif est du Ti02.

3. Procédé selon une des spécifications précédentes, **caractérisé en ce que** la concentration d'additifs dans le flux partiel de masse fondue (4) soit de 10 % à 30 % du poids avant remélangeage avec le flux principal de matière en fusion (3).

4. Procédé selon une des spécifications précédentes, **caractérisé en ce que** la concentration d'additifs dans le flux principal de matière en fusion (3) s'élève entre 0,03 % à 3 % après avoir ajouté le flux partiel de masse fondue (4) au mélange.

5. Procédé selon une des spécifications précédentes, **caractérisé en ce que** la vitesse de cisaillement utilisée dans le dispositif de dispersion (5) soit de 150 à 1800 sec$^{-1}$.

6. Procédé selon une des spécifications précédentes, **caractérisé en ce que** la taille maximale des particules des additifs soit de 5 $\mu$m dans le produit final re-mélangé.

7. Procédé selon une des spécifications précédentes, **caractérisé en ce que** la densité de couple du dispositif de dispersion (5) ne dépasse pas 10 Nm/cm$^3$.

8. Dispositif de modification en continu d'un polymère fondu composé d'un polyamide 6 non extrait (PA 6) avec un ou plusieurs additifs, contenant une conduite principale de matière en fusion (3), une conduite de déviation faisant dévier une partie de la matière en fusion principale (3) et conduisant ce flux partiel de masse fondue (4) dans un dispositif de dispersion (5) avec au moins cinq compartiments, permettant d'apporter un ou plusieurs additifs, et

   - le dispositif de dispersion (5) comprend un premier compartiment (13) équipé d'éléments de transport afin d'introduire le PA 6 non extrait à l'aide d'une pompe à masse fondue (9), et
   - un deuxième compartiment (14) équipé d'éléments de transport, avec une zone pour ajouter l'additif par le biais d'un alimentateur latéral raccordé au Side Feeder (12), avec ensuite humidification, et
   - un troisième compartiment (15) équipé de blocs de pétrissage en alternance avec des éléments de transport suivis d'éléments de transport et d'éléments de transport partiellement perméables, où les éléments de transport partiellement perméables et au moins une partie des éléments de transport sont conçus pour une rotation vers l'avant et/ou vers l'arrière afin que la dispersion soit optimale, et
   - un quatrième compartiment (16) équipé d'une zone de dégazage verrouillable avec des éléments de transport ou des éléments de transport partiellement imperméables,
   **caractérisé en ce que**
   - le dispositif de dispersion (5) comprend un cinquième compartiment (17) équipé d'éléments de mélange rotatifs vers l'arrière et/ou vers l'avant et/ou neutres suivis d'éléments de transport pour extraire la masse fondue fortement concentrée du dispositif de dispersion (5), et
   - le dispositif comporte une conduite renvoyant le flux partiel de masse fondue contenant les additifs (4) dans la conduite principale de matière en fusion (3), permettant d'introduire le mélange derrière le dispositif de dispersion (5) dans une autre pompe à masse fondue (18) et d'être de nouveau dosé vers la conduite principale de la masse fondue (3), où le flux partiel de masse fondue contenant les additifs (4) est de nouveau mélangé de manière statique avec le flux principal de la matière en fusion (3) grâce à un dispositif de mélange.

9. Dispositif selon la caractéristique 8, **caractérisé en ce que** le dispositif de dispersion (5) est une extrudeuse à double vis synchrone.

10. Dispositif selon la caractéristique 8 ou 9, **caractérisé en ce que** les éléments de mélange dans le cinquième compartiment (17) soient des disques dentés.

11. Dispositif selon une des caractéristiques 8 à 10, **caractérisé en ce que** les éléments de mélange dans le cinquième compartiment (17) soient des éléments de transport partiellement perméables.

12. Dispositif selon une des caractéristiques 8 à 10, **caractérisé en ce que** les éléments de mélange dans le cinquième compartiment (17) soient des disques dentés et des éléments de transport partiellement perméables.

**13.** Dispositif selon la caractéristique 10 ou 12, **caractérisé en ce que** les disques dentés soient rotatifs vers l'arrière ou vers l'avant.

**14.** Dispositif selon une des caractéristiques 8 à 13, **caractérisé en ce que** la vitesse de rotation des vis de l'alimentateur latéral puisse être réglée indépendamment de la vitesse de rotation du dispositif de dispersion (5).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1604368 A1
- DE 4039857 A1
- WO 2012168252 A1
- DE 102007060338 A1
- US 2014080951 A1
- US 2015184055 A1

- EP 0410649 A1
- WO 2014141978 A1
- WO 2014179035 A1
- EP 0410650 A1
- WO 2008045754 A2
- EP 0852533 B2

**In der Beschreibung aufgeführte Nicht-Patentliteratur**

- *Chemical Eng. Progress,* 1982, vol. 78 (1), 62 ff
- *Chemiefaser/Textilindustrie,* 1986, vol. 1, 24 ff

- Der Doppelschneckenextruder: Grundlagen und Anwendungsgebiete. VDI-Verlag, 1998, 63
- **JIM LITSTER ; BRYAN ENNIS.** The Science and Engineering of Granulation Processes. Springer Science+Business Media Dordrecht, 2004, 17-24